# EUROPÄISCHE PATENTSCHRIFT

(11) **EP 1 789 861 B1**
(45) Veröffentlichungstag und Bekanntmachung des Hinweises auf die Patenterteilung: **27.07.2011**
(21) Anmeldenummer: 05782868.3
(22) Anmeldetag: 14.09.2005
(51) Int. Cl.: G05B 19/4061, B25J 9/16

(54) **VERFAHREN ZUR KOLLISIONSVERMEIDUNG**
METHOD FOR AVOIDING COLLISIONS
PROCEDE POUR EVITER DES COLLISIONS

(30) Priorität: 15.09.2004 AT 15582004
(43) Veröffentlichungstag der Anmeldung: 30.05.2007
(73) Patentinhaber: WFL Millturn Technologies GmbH & Co. KG, A-4030 Linz (AT)
(72) Erfinder: SCHINERL, Christoph, A-4616 Weisskirchen/Traun (AT)
(74) Vertreter: Jell, Friedrich
(86) Internationale Anmeldenummer: PCT/AT2005/000367
(87) Internationale Veröffentlichungsnummer: WO 2006/029432

(56) Entgegenhaltungen:
- EP-A2- 1 366 867
- EP-A2- 1 366 867
- DE-A1- 10 226 140
- FREUND E ET AL: "EIN ALGORITHMS ZUR KOLLISIONSERKUNNUNG UND -VERMEIDUNG BEI ROBOTERNMIT ZYLINDERFORMIGEM ARBEITSRAUM" ROBOTERSYSTEME, SPRINGER VERLAG. BERLIN, DE, Bd. 6, Nr. 1, 1. März 1990 (1990-03-01), Seiten 1-10, XP000104118
- CHANG C ET AL: "COLLISION AVOIDANCE OF TWO GENERAL ROBOT MANIPULATORS BY MINIMUM DELAY TIME" IEEE TRANSACTIONS ON SYSTEMS, MAN AND CYBERNETICS, IEEE INC. NEW YORK, US, Bd. 24, Nr. 3, 1. März 1994 (1994-03-01), Seiten 517-522, XP000440883 ISSN: 0018-9472
- NAK YOUNG CHONG ET AL: "Coordinated rate control of multiple telerobot systems with time delay" IEEE SMC'99 CONFERENCE PROCEEDINGS. 1999 IEEE INTERNATIONAL CONFERENCE ON SYSTEMS, MAN, AND CYBERNETICS (CAT. NO.99CH37028) IEEE PISCATAWAY, NJ, USA, Bd. 5, 1999, Seiten 1123-1128 vol., XP002390297 ISBN: 0-7803-5731-0
- NAK YOUNG CHONG ET AL: "Remote coordinated controls in multiple telerobot cooperation" PROCEEDINGS 2000 ICRA. MILLENNIUM CONFERENCE. IEEE INTERNATIONAL CONFERENCE ON ROBOTICS AND AUTOMATION. SYMPOSIA PROCEEDINGS (CAT. NO.00CH37065) IEEE PISCATAWAY, NJ, USA, Bd. 4, 2000, Seiten 3138-3143 vol., XP002390298 ISBN: 0-7803-5886-4
- FENG D.; KROGH B.H.: "A robust satisficing feedback strategy for autonomous navigation", IEEE INTERNATIONAL SYMPOSIUM ON INTELLIGENT CONTROL 1989, 26 September 1989 (1989-09-26), pages 379-384, XP010017594, ISBN: 0-8186-1987-2
- FOX D.; BURGARD W.; THRUN S.: "Controlling synchro-drive robots with the dynamic window approach to collision avoidance", PROCEEDINGS IROS 96, 4 November 1996 (1996-11-04), pages 1280-1287, XP010212585, ISBN: 978-0-7803-3213-3
- FENG D.; KROGH B.H.: 'A robust satisficing feedback strategy for autonomous navigation' IEEE INTERNATIONAL SYMPOSIUM ON INTELLIGENT CONTROL 1989 26 September 1989, Seiten 379 - 384, XP010017594 ISBN: 0-8186-1987-2
- FOX D.; BURGARD W.; THRUN S.: 'Controlling synchro-drive robots with the dynamic window approach to collision avoidance' PROCEEDINGS IROS 96 04 November 1996, Seiten 1280 - 1287, XP010212585 ISBN: 978-0-7803-3213-3

## Beschreibung

### Technisches Gebiet

Die Erfindung betrifft ein Verfahren zur Kollisionsvermeidung eines entlang wenigstens zweier Achsen relativ zu einem Hindernis auf einer der Kollisionsüberwachung nicht bekannten zukünftigen Bewegungsbahn bewegbaren Teils, welche Achsen je einen Vorschubantrieb aufweisen, wobei in vorgegebenen Zeitintervallen wiederholt aus den relativen Orts- und Geschwindigkeitsdaten des bewegten Teils ein minimaler Anhalteweg in Abhängigkeit von den hiefür erforderlichen Maschinen- und Teiledaten ermittelt und der Kollisionsberechnung zugrunde gelegt wird, und dass der Kollisionsberechnung wenigstens eine Komponente, von den auf die einzelnen Achsen bezogenen Komponenten des Anhaltewegs, zugrunde gelegt wird, die eine Bremsung unter Verwendung der zum jeweiligen Abfragezeitpunkt der einzelnen Abfragezeitintervalle abgefragten Geschwindigkeitsdaten berücksichtigt.

### Stand der Technik

Um bei einem bewegbaren Teil eine Kollision mit einem Hindernis vermeiden zu können, ist es nach dem Stand der Technik bekannt, den voraussichtlichen Anhalteweg des bewegten Teils zu überwachen bzw. diesen Anhalteweg einer Kollisionsberechnung zugrunde zulegen. Von Schwierigkeit ist es nun, den Anhalteweg derart zu berechnen, dass dieser mit dem tatsächlichen Anhalteweg, der entlang der Bewegungsbahn des Teils verläuft, übereinstimmt. Ist dies nicht oder nur annähernd der Fall - das Teil bewegt sich anders als vermutet -, so kann eine Kollision übersehen bzw. auch falsch angenommen werden. Verschiedenste Verfahren zum Abschätzen solch eines Anhaltewegs sind nun aus dem Stand der Technik bekannt. So schlägt beispielsweise die DE 10 226 140 A1 vor, den voraussichtlichen Anhalteweg unter Berücksichtigung der vorhergegangenen Bewegungsbahn abzuschätzen. Vorausgesetzt wird nämlich, dass sich das bewegte Teil mit hoher Wahrscheinlichkeit so weiterbewegen wird, wie dies in der Vergangenheit der Fall war. Zu diesem Zweck werden für den Anhalteweg die derzeitigen und vorhergegangenen Ort- und Geschwindigkeitsdaten des Teils abgefragt und ein minimaler Anhalteweg in Abhängigkeit von den hiefür erforderlichen Maschinen- und Teiledaten ermittelt. Zu den erforderlichen Maschinen- und Teiledaten sind beispielsweise die maximale Bremsbeschieunigung der jeweiligen Vorschubantriebe auf den Achsen bzw. auch die Masse des bewegten Teils zu zählen. Von Nachteil bei solch einer Abschätzung auf Grundlage der vorhergegangenen Bewegungsbahn ist, dass bei einer unvorhergesehenen zukünftigen Bewegung des Teils ein falscher Anhalteweg ermittelt wird, womit das Verfahren zur Kollisionsvermeidung fehlerbehaftet ist.

Gemäß der EP 0 382 231 B1 und der EP 1 332 841 A2 werden Verfahren zur Kollisionsvermeidung geoffenbart, gemäß denen einem bewegten Teil positionsabhängige Maximalgeschwindigkeiten vorgeschrieben werden. Wird zum Abfragezeitpunkt eine vorgegebene Maximalgeschwindigkeit überschritten, so ist das bewegte Teil zu stoppen, um eine Kollision zu vermeiden. Die Maximalgeschwindigkeit ergibt sich aus dem Anhalteweg, der sich von der aktuellen Position des bewegten Teils aus ermittelt. Bei solch einer Berechnung können auch gemäß der EP 1 332 841 A2 Maschinendaten, insbesondere Betriebsgrößen des Roboters, berücksichtigt werden. Unter anderem können auch maximale Beschleunigungswerte berücksichtigt werden, um beim von der aktuellen Position aus berechneten Anhalteweg einfließen zu lassen, dass das bewegte Teil vor seiner aktuellen Position maximal beschleunigt worden ist. Die Bewegung des Teils während der Kollisionsberechnung wird auf nachteiliger Weise vernachlässigt, was zu einem falschen Anhalteweg führen und damit keine Kollisionsfreiheit gewährleistet kann.

Weiteres ist aus Fox D et al, "Controlling Synchro-drive Robots with the Dynamic Window Approach to Collision Avoidance", Proc.IROS 96, Seiten 1280-1287 (4-11-1996) [XP10212585] ein Verfahren zur Findung einer Bewegungsbahn bekannt, bei dem ein Suchbereich im Geschwindigkeitsraum verkleinert wird, um so schneller eine optimierte Bewegungsbahn aus einer Vielzahl an kollisionsfreien Bewegungsbahnen auswählen zu können. Zu diesem Zweck wird der maximale Geschwindigkeitsraum des Roboters zuerst auf die erlaubten maximalen Geschwindigkeiten eingeschränkt, die dieser Roboter auf seinen dazupassenden Trajektorien fahren darf, um damit noch rechtzeitig vor einem Hindernis anhalten zu können. Die erlaubten und damit kollistonsfrelen Geschwindigkeiten werden je Ober den Anhalteweg der diesbezüglichen Trajektorie berechnet Über diese kollisionsfreien Geschwindigkeitsdaten des Geschwindigkeitsraums wird nun ein "dynamic window" gelegt, um damit die kollisionsfreien Geschwindigkeiten und damit auch die Trajektorien auszuschließen, die im nächsten Zeitschritt vom Roboters gar nicht erreicht werden können. In der XP10212585 ist weder die zukünftige Bewegungsbahn unbekannt noch wird ein Anhaltebereich berechnet. Eine Koillsionsfreiheit auf einer der Kollisionsüberwachung nicht bekannten zukünftigen Bewegungsbahn kann dieses Verfahren nicht sicherstellen.

### Darstellung der Erfindung

Der Erfindung liegt daher die Aufgabe zugrunde, ein Verfahren der eingangs geschilderten Art derart auszugestalten, dass für ein bewegtes Teil eine Kollisionsfreiheit sichergestellt werden kann. Außerdem soll für dieses Verfahren eine geringe Rechenleistung notwendig sein.

Die Erfindung löst die gestellte Aufgabe dadurch, dass der Kollisionsberechnung zum Erstellen eines durch die möglichen Anhaltewege des Teils gebildeten Anhaltebereichs für jede Achse zwei darauf bezogene Komponenten des Anhaltewegs zugrunde gelegt werden, welche erste Komponente eine Bremsung berücksichtigt, die von abgefragten und diese um eine maximale positive Beschleunigung des zugehörigen Vorschubantriebs zumindest während des Abfragezeitintervalls erhöhten Geschwindigkeitsdaten ausgeht, und weiche andere Komponente eine Bremsung berücksichtigt, die von abgefragten und diese um eine maximale negative Beschleunigung des zugehörigen Vorschubantriebs zumindest während des Abfragezeitintervalls verringerten Geschwindigkeitsdaten ausgeht.

Wird der Kollisionsberechnung wenigstens eine Komponente, von den auf die einzeinen Achsen bezogenen Komponenten des Anhaltewegs, zugrunde gelegt, so betrachtet man nicht wie beim Stand der Technik von Anfang an die Gesamtbewegung des Teils, sondern es wird zunächst die Betrachtungsweise auf die einzelnen Achsen gelegt, wobei sich diese Achsen gemäß den jeweiligen Vorschubantrieben zwischen dem bewegten Teil und dem Hindernis bilden. Mit solch einer Betrachtungsweise lassen sich auf einfache Weise Einflüsse auf die Achsen berücksichtigen, ohne dass hierfür hohe Rechenleistungen verlangt werden. Insbesondere aber eröffnet sich damit die Möglichkeit, zu berücksichtigen, dass sich wenigstens eine Komponente aus den in den einzelnen Zeitintervallen abgefragten, um eine maximale Beschleunigung des zugehörigen Vorschubantriebs zumindest während des Abfragezeitintervalls veränderten Geschwindigkeitsdaten ermittelt. Der Erfindung liegt nämlich die Erkenntnis zugrunde, dass ausgehend von einem Abfragezeitpunkt bis zum Bremszeitpunkt die äußerste Bewegung des Teils solch eine Bewegung sein kann, bei der maximale Beschleunigungen wirken. Dies Erkenntnis lässt sich einfach bei der Berechnung eines Anhaltewegs berücksichtigen, in dem sich eine Komponente des Anhaltewegs aus veränderten Geschwindigkeitsdaten ermittelt, nämlich beispielsweise aus den erhöhten Geschwindigkeitsdaten zum Bremszeitpunkt und nicht aus aktuellen Geschwindigkeitsdaten zum Abfragezeitpunkt. Erfindungsgemäß sind damit bei der Kollisionsberechnung alle möglichen Bewegungen des Teils - auch die Extremsten - berücksichtigt, ohne dass in irgendeiner Weise auf eine vergangene Bewegung des Teils Rücksicht genommen werden muss. Da damit auch sichergestellt ist, dass die tatsächliche Bewegung des Teils immer innerhalb des ermittelten Anhaltewegs verläuft, kann auch eine Bewegung des Teils nicht falsch abgeschätzt werden, was im Gegensatz zum Stand der Technik eine Kollisionsfreiheit stets garantiert. Wer den der Kollisionsberechnung von jeder Achse zwei Komponenten des Anhaltewegs zugrunde gelegt, weiche zwei Komponenten sich aus den in den einzelnen Zeitintervallen abgefragten um eine für die eine Komponente maximale positive Beschleunigung und für die andere Komponente maximale negative Beschleunigung des zugehörigen Vorschubantriebs zumindest während des Abfragezeitintervalls erhöhten bzw. verringerten Geschwindigkeitsdaten ermitteln, so kann ein Anhaltebereich berechnet werden, der sich aus allen möglichen Anhaltewegen des bewegten Teils bildet. Die verschiedenen Komponenten bezogen auf eine Achse ergeben nämlich in Kombination mit den anderen Komponenten Anhaltewege, die zur Begrenzungen des Anhaltebereichs herangezogen werden können. Diesen Anhaltebereich kann das bewegte Teil in seiner zukünftigen Bewegung nicht verlassen, so dass damit sichergestellt ist, dass jede weiterführende Bewegung des Teils durch den Anhaltebereich erfasst wird. Die Aufgabe der Kollisionsberechnung ist es nun, über diese Komponenten den Anhaltebereich des bewegten Teils zu überwachen.

Werden zur Kollisionsberechnung zusätzlich zumindest die dem Abfragezeitintervall folgenden Zeitintervall zugehörigen Ortsdaten herangezogen, so kann der Anhaltebereich vorteilhaft verkleinert werden. Es stehen der Steuerung nämlich meist die zukünftigen bzw. nächsten Ortsdaten zur Verfügung, die sodann für die Kollisionsberechnung herangezogen werden können. Damit lässt sich ein Anhaltebereich erstellen, der zumindest bis zu diesen nächsten Bewegungskoordinaten mit der Bewegungsbahn übereinstimmt, wobei ab diesen nächsten Bewegungskoordinaten aufgrund der nunmehr unbekannten Bewegungsbahn sich der Anhaltebereich erweitert. Insbesondere für eine Reduktion des Rechenaufwands bringt ein verkleinerter Anhaltebereich Vorteile.

Um eine höhere Toleranz gegenüber Maschinenungenauigkeiten zu erreichen, können auf einfache Weise bei der Berechnung der Komponenten des Anhaltewegs Sicherheitsfaktoren berücksichtigt werden, in dem die um Sicherheitsfaktoren in der Wertigkeit zusätzlich veränderten Komponenten des Anhaltewegs der Kollisionsberechnung zugrunde gelegt werden.

Wird im ermittelten Kollisionsfall die Bremsung des Teils am Beginn des dem Abfragezeitintervall folgenden Zeitintervalls eingeleitet, so steht zur Kollisionsberechnung ein gesamtes Zeitintervall zur Verfügung. Wird außerdem eine Bremsung eingeleitet, wenn die Kollisionsberechnung bis zum dem Abfragezeitintervall folgenden Zeitintervall nicht abgeschlossen worden ist, so kann verhindert werden, dass eine Kollision übersehen wird.

Mit einer wiederholten Ermittlung der Komponenten des Anhaltewegs trotz einer Bremseinleitung, kann gegenüber dem Stand der Technik während des Bremsens eine Kollisionsfreiheit erkannt werden. Bekannte Verfahren gehen von einem Stoppen des Teils aus, im Gegensatz dazu kann jedoch die Erfindung erkennen, ob sich für das bewegte Teil während der Bremsung eine Kollisionsfreiheit ergibt, womit auch wieder die Bremse freigegeben werden kann.

### Kurze Beschreibung der Zeichnung

Durch die Zeichnungen wird das erfindungsgemäße Verfahren beispielsweise anhand von angenommenen Orts-, Geschwindigkeits-, Maschinen- und Teiledaten dargestellt. Es zeigen
- Fig. 1: die über eine gemeinsame Zeitachse aufgetragenen Geschwindig- keitsdaten eines entlang zweier Maschinenachsen bewegten Teils,
- Fig. 2: einen in vereinfachter Form dargestellten Anhaltebereich, der sich durch Integration aller möglichen Geschwindigkeitsdaten gemäß Fig. 1 erstellt und somit alle möglichen Anhaltewege des bewegten Teils be- inhaltet, und
- Fig. 3: das erfindungsgemäße Verfahren am bewegten Teil mit den zu den jeweiligen Ortsdaten des bewegten Teils zugehörigen Anhalteberei- chen.

### Weg zur Ausführung der Erfindung

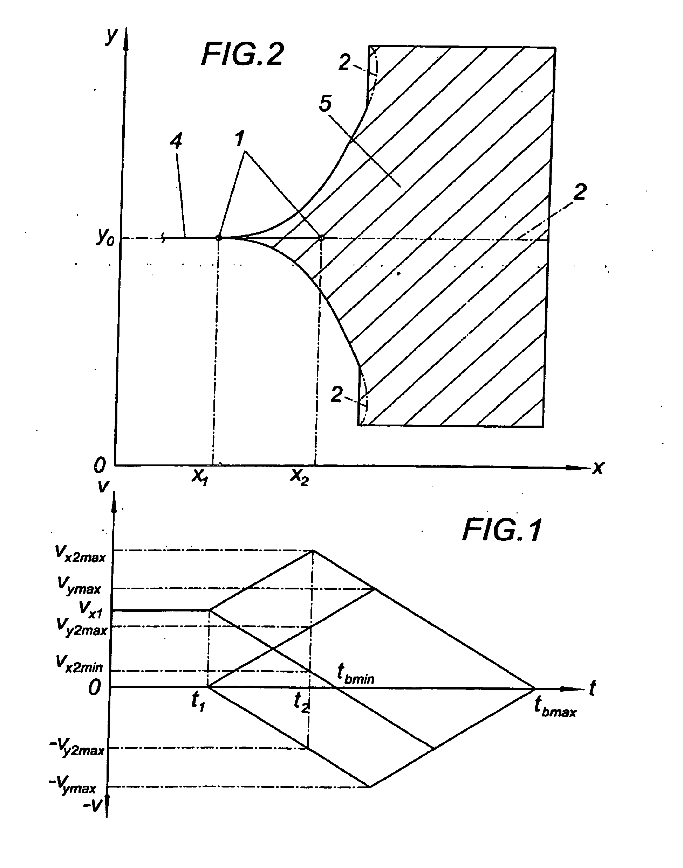

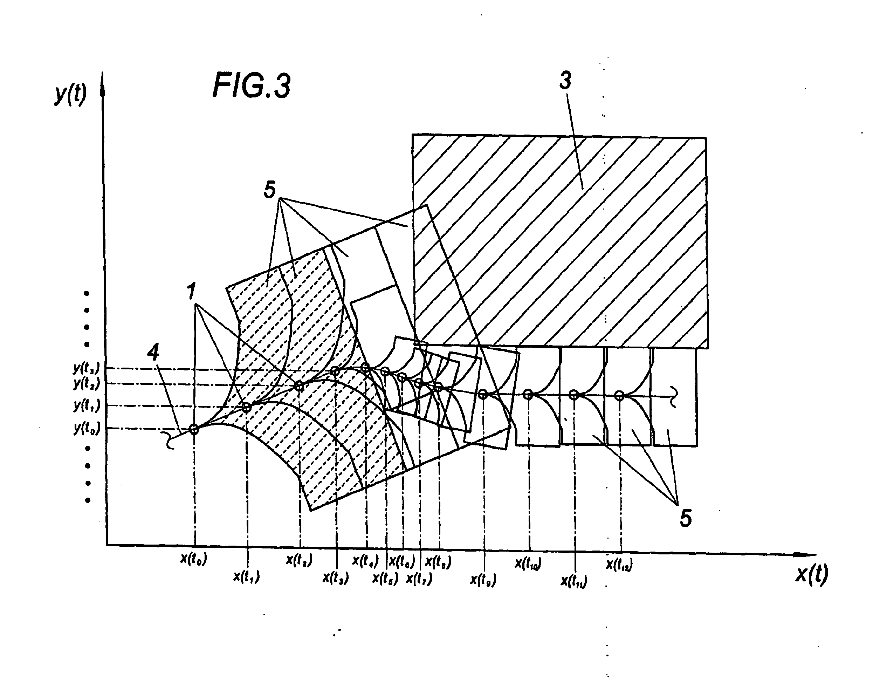

Gemäß der Fig. 3 wird beispielsweise für ein der Übersichtlichkeit halber punktförmig dargestelltes bewegtes Teil 1 das Verfahren zur Kollisionsvermeidung gezeigt, wobei das bewegte Teil 1 entlang zweier Maschinenachsen x und y über je einen zugehörigen Vorschubantrieb bewegbar ist. Der Einfachheit halber wurden auf rotatorische Bewegungen im Ausführungsbeispiel verzichtet, wobei nicht weiter erwähnt werden muss, dass auch entlang einer Drehachse ein Teil 1 bewegt werden kann. In vorbestimmten Zeitintervallen, z.B. zwischen t₁ und t₂, wird wiederholt aus den Ortsdaten x(t) und y(t) und den Geschwindigkeitsdaten vₓ(t) und v_{y}(t) des bewegten Teils 1 ein minimaler Anhalteweg 2 in Abhängigkeit von den hiefür erforderlichen Maschinen- und Teiledaten ermittelt. Der minimale Anhalteweg 2 ist insbesondere der Fig. 2 zu entnehmen, wobei hinzuzufügen ist, dass der Einfachheit halber zunächst nur eine Komponente des minimalen Anhaltewegs 2 in Richtung der Maschinenachse x betrachtet wird. So geht in diese Ermittlung des Anhaltewegs 2, beispielsweise die derzeitige Geschwindigkeit vₓ₁ des Teils 1, die maximale zulässige Bremsbeschleunigung und auch die derzeitigen Ortsdaten x₁ des Teils 1 ein. Die Kollisionsberechnung hat nun zu bestimmen, ob ein Hindernis 3 in den minimalen Anhalteweg 2 des bewegten Teils 1 ragt.

Von besonderer Bedeutung ist jedoch, dass für die erfindungsgemäße Kollisionsberechnung besondere Voraussetzungen beim Ermitteln des minimalen Anhaltewegs berücksichtigt werden.

Wie der Fig. 1 entnommen werden kann, weist die Maschinenachse x eine Geschwindigkeit vₓ₁ zum Zeitpunkt t₁ auf. Der Zeitpunkt t₁ stellt den Abfragezeitpunkt des Zeitintervalls t₁ bis t₂ für die Daten zur Ermittlung des Anhaltewegs 2 dar. Zum Zeitpunkt t₂ wird eine Bremsung eingeleitet, nämlich unter einer maximalen negativen Beschleunigung des jeweiligen Vorschubantriebs auf der Maschinenachse x. Zwischen dem Abfragezeitpunkt t₁ und dem Bremszeitpunkt t₂ wird erfindungsgemäß berücksichtigt, dass eine maximale Beschleunigung auf der Bewegungsbahn des bewegten Teils 1 wirkt (vgl. Zunahme der Geschwindigkeit von vₓ₁ auf vₓ₂ₘₐₓ). Die für diese Annahme erforderlichen Maschinen- und Teiledaten sind bekannt. Geht man nun davon aus, dass der Kollisionsüberwachung die zukünftige Bewegungsbahn 4 des Teils nicht bekannt ist, so kann mit der Annahme einer maximalen Beschleunigung des Teils 1 im Zeitintervall t₁ bis t₂ auf eine Abschätzung der voraussichtlichen Bewegungsbahn 4 verzichtet werden. Nämlich deshalb, weil die Kollisionsüberwachung alle Bewegungen - einschließlich der maximal möglichen Bewegung - auf der Maschinenachse x überwacht. Denn äußerstenfalls kann sich die Bewegungsbahn 4 des Teils 1 gemäß einer maximalen (positiven oder negativen) Beschleunigung verändern. Es ist daher gegenüber dem Stand der Technik nicht notwendig eine Bewegung des Teils auf Grundlage einer vorhergegangenen Bewegung abzuschätzen. Erfindungsgemäß wird damit eine Kollisionsfreiheit garantiert, da ja alle möglichen Anhaltewege 2 des bewegten Teils 1 der Kollisionsberechnung zugeführt werden.

Hiefür wird erfindungsgemäß vorgeschlagen, dass zumindest eine Komponente des Anhaltewegs erstellt wird, die sich aus veränderten Geschwindigkeitsdaten vₓ(t) bzw. v_{y}(t) des bewegten Teils ermittelt. In anderen Worten, die auf die Maschinenachsen x bezogene Komponente des Anhaltewegs berücksichtigt unter anderem eine Bremsung unter einer Geschwindigkeitszunahme von vₓ₁ auf vₓ₂ₘₐₓ. Dass außerdem diese Komponente des Anhaltewegs 2 auch die Bewegung des Teils 1 während des Zeitintervalls t₁ bis t₂ berücksichtigt ändert nichts an der Erfindung. Nämlich, dass der Kollisionsberechnung wenigstens eine Komponente, von den auf die einzelnen Achsen bezogenen Komponenten des Anhaltewegs 2, zugrunde gelegt wird, welche Komponente sich aus den in den einzelnen Zeitintervallen abgefragten, um eine maximale Beschleunigung des zugehörigen Vorschubantriebs zumindest während des Abfragezeitintervalls (t₁ bis t₂, etc.) veränderten Geschwindigkeitsdaten vₓ(t) bzw. v_{y}(t) ermittelt. Der Kollisionsberechnung wird daher erfindungsgemäß ein Anhalteweg 2 zugrunde gelegt, der auch den durch die zukünftige Bahnbewegung der Kollisionsberechnung unbekannten Anhalteweg einschließt. Zwar gibt es konstruktiv bedingte Geschwindigkeitsgrenzen - dies stellt jedoch für die Erfindung keine Einschränkung dar, denn in diesem Fall muss lediglich die Geschwindigkeit auf der jeweiligen Achse begrenzt werden - eine weitere Beschleunigung der jeweiligen Maschinenachse x oder y ist somit nicht möglich -. Der Kollisionsberechnung steht daher ein Anhalteweg 2 in x-Richtung zur Verfügung, der alle zukünftigen bahnbestimmten Anhaltewege einschließt. Damit kann gegenüber dem Stand der Technik eine vollständige Kollisionsfreiheit gewährleistet werden, da egal wie sich die zukünftige Bewegungsbahn 4 des Teils 1 verhält, eine falsche Abschätzung des Anhaltewegs 2 nicht eintreten kann.

Im Falle, dass eine Bewegung in mehren Maschinenachsen x und y stattfindet, muss ein Anhaltebereich 5 betrachtet werden, wobei sich dieser Anhaltebereich 5 aus den möglichen Anhaltewegen 2 des bewegten Teils 1 zum Abfragezeitpunkt t₁ bildet. Zu diesem Zweck werden für jede Maschinenachse x bzw. y zwei bezogene Komponenten des Anhaltewegs 2 ermittelt, nämlich einerseits eine Komponente mit der Annahme einer maximalen positiven Beschleunigung des zugehörigen Vorschubantriebs ab dem Abfragezeitpunkt t₁ bis zum Bremszeitpunkt t₂ (vₓ₁ auf vₓ₂ₘₐₓ) und andererseits eine andere Komponente mit der Annahme einer maximalen negativen Beschleunigung des zugehörigen Vorschubantriebs ab dem Abfragezeitpunkt t₁ bis zum Bremszeitpunkt t₂ (vₓ₁ auf vₓ₂ₘᵢₙ). Mit der Kombination der sohin entstehenden Komponenten bezogen auf die verschiedenen Maschinenachsen x und y kann so die Begrenzung des Anhaltebereichs 5 erstellt werden. Beispielsweise entsteht ein trichterförmiger Anhaltebereich 5, der alle möglichen Anhaltewege 2 einschließt. Im Fall, dass eine Maschinenachse x oder y, insbesondere die x-Achse, eine bahnvorgegebene maximale negative Beschleunigung durchführt (vₓ₁ auf vₓ₂ₘᵢₙ), schließt dann im Zeitpunkt t₂ diese maximale Bremsung mit gleicher Steigung an (Fig. 1). Zum Zeitpunkt t_{bmin} kommt die Maschinenachse x dann zum Stillstand. Außerdem lässt sich Fig. 1 entnehmen, dass auch bei Stillstand einer Maschinenachse x oder y, insbesondere der y Achse, vom Abfragezeitpunkt t₁ aus eine Beschleunigung von 0 auf v_{y2max} bzw. -v_{y2max} stattfinden kann. Ebenso ist Fig. 1 zu entnehmen, dass beispielsweise bei einer maximalen Bremsung der einen Maschinenachse x die andere Maschinenachse y weiter beschleunigt wird (vgl. v_{y2max} auf v_{ymax}), bis schlussendlich Geschwindigkeitsgleichheit |vₓ(t)|=|v_{y}(t)| besteht, wonach beide Maschinenachsen x und y gleichlaufend abgebremst werden. So kommen beispielsweise zum Zeitpunkt t_{bmax} bzw. auch zum Zeitpunkt t_{bmin} beide Maschinenachse x und y gleichzeitig zum Stillstand. Dabei wurde beispielsweise angenommen, dass es beiden Maschinenachsen x und y möglich ist, gleiche Beschleunigungen aufzubringen. Über Integration der Geschwindigkeiten vₓ(t) und v_{y}(t) lässt sich dann der Anhaltebereich 5 gemäß Fig. 2 erstellen, wobei dieser Anhaltebereich 5 vereinfacht dargestellt worden ist.

Zu beachten ist, dass ein Anhaltebereich 5 durch die Geschwindigkeitsverteilung der Maschinenachsen x und y bestimmt ist. Somit können bewegungsbahnbedingt verschieden geformte Anhaltebereiche 5 bestehen, wobei vereinfacht in Fig. 3 ein Anhaltebereich 5 verwendet wird, der die verschiedenen Anhaltebereiche in sich aufnimmt. Wird nun solch ein ermittelter Anhaltebereich 5 auf die Bewegungsbahn 4 aufgetragen (Fig. 3), so erkennt man, dass zum Abfragezeitpunkt t₀ noch keine Kollision mit dem Hindernis 3 besteht, die Bewegung kann also gemäß der vorgegebenen Bewegungsbahn 4 wederverfolgt werden. Zum Zeitpunkt t₁ ist jedoch eine Kollision mit einem Hindernis 3 möglich, nämlich, in dem es zu einer Überlappung des zugehörigen Anhaltebereichs 5 mit dem Hindernis 3 kommt. Zum Zeitpunkt t₂ wird eine Bremsung mit maximaler negativer Beschleunigung eingeleitet - der zum Zeitpunkt t₂ errechnete Anhaltebereich 5 überlappt jedoch das Hindernis 3 weiter, da bis zum Zeitpunkt t₂ aufgrund der vorbestimmten Bewegungsbahn 4 keine Bremsung erfolgte. Mit maximaler Bremsung bis zum Zeitpunkt t₃ ergibt sich auch dann ein dementsprechend verkleinerter Anhaltebereich 5, der mit der Stimkante des Anhaltebereichs 5 zum Zeitpunkt t₂ übereinstimmt. Eine Kollisionsgefahr besteht weiter, da die zukünftige Bewegungsbahn 4 der Kollisionsberechnung ja nicht bekannt ist, so dass das Bremsen des Teils 1 aufrecht bleiben muss. Zum Zeitpunkt t₄ führt die vorgegebene Bewegungsbahn 4 vom Hindernis 3 weg, wodurch auch der bremsverkleinerte Anhaltebereich 5 abdreht. Eine Kollision ist aber zum Zeitpunkt t₄ immer noch möglich, so dass die Bremsung des bewegten Teils 1 auf der Bewegungsbahn 4 fortgesetzt wird.

Da nach einer Bremseinleitung wiederholt die Komponenten des Anhaltewegs 2 ermittelt werden, kann zum Zeitpunkt t₅ eine Kollisionsfreiheit erkannt werden. So dass beispielsweise ab dem Zeitpunkt t₈ die Bremse nach einer Bremseinleitung wieder freigegeben werden kann, da schon seit t₅ eine Kollisionsfreiheit bekannt ist. Eine Beschleunigung auf der Bewegungsbahn 4 kann somit erfolgen, jedoch nur bis zur Ermittlung einer erneuten Kollision. So dass sich schlussendlich eine Geschwindigkeit des Teils 1 auf der Bewegungsbahn 4 einstellt, die gerade so hoch ist, um Kollisionsfreiheit zu gewährleisten. Daher wird das bewegte Teil 1 erfindungsgemäß nur dann gestoppt, wenn dies unbedingt notwendig ist.

Um einen Anhaltebereich 5 in seiner Fläche zu verkleinern, ist es von Vorteil, zur Berechnung der Komponenten die dem Abfragezeitintervall (t₁ bis t₂, etc.) folgenden Zeitintervall (t₂ bis t₃, etc.) zugehörigen Ortsdaten x(t) bzw. y(t) heranzuziehen. Denn meist sind der Steuerung die zukünftigen Ortsdaten x₂ und y₂ für den nächsten abzufahrenden Punkt der Bewegungsbahn 4 bekannt. Somit ist dann der Anhaltebereich 5 lediglich vom Zeitpunkt t₂ aus unbekannt, was aber nicht näher dargestellt worden ist. Ebenfalls können in die Komponenten des Anhaltewegs 2 Sicherheitsfaktoren einfließen, um eventuelle Maschinenungenauigkeiten zu berücksichtigen. Da dies lediglich eine Vergrößerung des Anhaltebereichs 5 bedeutet, ist auf die Darstellung verzichtet worden. Außerdem kann mit einer Bremsung des Teils 1 am Beginn des dem Abfragezeitintervall (t₁ bis t₂, etc.) folgenden Zeitintervalls (t₂ bis t₃, etc.) ausgeschlossen werden, dass bei nicht abgeschlossener Kollisionsberechnung eine Kollision übersehen wird, was auch nicht näher dargestellt worden ist.

## Patentansprüche

1. Verfahren zur Kollisionsvermeidung eines entlang wenigstens zweier Achsen relativ zu einem Hindernis auf einer der Kollisionsüberwachung nicht bekannten zukünftigen Bewegungsbahn bewegbaren Teils, welche Achsen je einen Vorschubantrieb aufweisen,
wobei in vorgegebenen Zeitintervallen wiederholt aus den relativen Orts- und Geschwindigkeitsdaten des bewegten Teils ein minimaler Anhalteweg in Abhängigkeit von den hiefür erforderlichen Maschinen- und Teiledaten ermittelt und der Kollisionsberechnung zugrunde gelegt wird, und
dass der Kollisionsberechnung wenigstens eine Komponente, von den auf die einzelnen Achsen (x, y) bezogenen Komponenten des Anhaltewegs (2), zugrunde gelegt wird,
die eine Bremsung unter Verwendung der zum jeweiligen Abfragezeitpunkt (t1, etc.) der einzelnen Abfragezeibntervalle (t₁ bis t₂, etc.) abgefragten Geschwindigkeitsdaten (vₓ(t) bzw. v_{y}(t)) berücksichtigt,
**dadurch gekennzeichnet, dass**
der Kollisionsberechnung zum Erstellen eines durch die möglichen Anhaltewege (2) des Teils gebildeten Anhaltebereichs (5) für jede Achse (x, y) zwei darauf bezogene Komponenten des Anhaltewegs (2) zugrunde gelegt werden,
welche erste Komponente eine Bremsung berücksichtigt, die von abgefragten und diese um eine maximale positive Beschleunigung des zugehörigen Vorschubantriebs zumindest während des Abfragezeitintervalls (t₁ bis t₂, etc.) erhöhten Geschwindigkeitsdaten (vₓ₂ₘₐₓ bzw. v_{y2max}) ausgeht, und welche andere Komponente eine Bremsung berücksichtigt, die von abgefragten und diese um eine maximale negative Beschleunigung des zugehörigen Vorschubantriebs zumindest während des Abfragezeitintervalls (t₁ bis t₂, etc.) verringerten Geschwindigkeitsdaten (vₓ₂ₘᵢₙ bzw. -v_{y2max}) ausgeht.

2. Verfahren zur Kollisionsvermeidung nach Anspruch 1, **dadurch gekennzeichnet, dass** zum Verkleinern des Anhaltebereichs (5) zumindest die dem Abfragezeitintervall (t₁ bis t₂, etc.) folgenden Zeitintervall (t₂ bis t₃, etc.) zugehörigen Ortsdaten (x(t), y(t)) herangezogen werden und der Kollisionsberechnung zusätzlich zugrunde gelegt werden.

3. Verfahren zur Kollisionsvermeidung nach Anspruch 1 oder 2, **dadurch gekennzeichnet, dass** die um Sicherheitsfaktoren in der Wertigkeit zusätzlich veränderten Komponenten des Anhaltewegs (2) der Kollisionsberechnung zugrunde gelegt werden.

4. Verfahren zur Kollisionsvermeidung nach einem der Ansprüche 1 bis 3, **dadurch gekennzeichnet, dass** die Bremsung des Teils (1) am Beginn des dem Abfragezeitintervall (t₁ bis t₂, etc.) folgenden Zeitintervalls (t₂ bis t₃, etc.) eingeleitet wird, wenn entweder ein Kollisionsfall ermittelt oder die Kollisionsberechnung bis zum dem Abfragezeitintervall (t₁ bis t₂, etc.) folgenden Zeitintervall (t₂ bis t₃, etc.) nicht abgeschlossen worden ist.

5. Verfahren zur Kollisionsvermeidung nach einem der Ansprüche 1 bis 4, **dadurch gekennzeichnet, dass** nach einer Bremseinleitung die wiederholte Ermittlung der Komponenten des Anhaltewegs (2) fortgesetzt und der Kollisionsüberwachung zugrunde gelegt wird und dass mit einer **dadurch** ermittelten Kollisionsfreiheit die Bremse freigegeben wird.

## Claims

1. Method for avoiding collisions of a part that can move along at least two axes relative to an obstacle on a future path of motion that is unknown to the collision monitoring system, each axis of said part having a feed drive,
with a minimum stopping path being repeatedly ascertained at specified time intervals from the relative positional and speed data of the moving part as a function of the requisite machine and part data, providing the basis for the collision calculation, and
at least one component of the components of the stopping path (2) referenced to the individual axes (x, y) providing the basis for the collision calculation,
which takes into consideration braking utilising the speed data (vₓ(t) or v_{y}(t)) polled at each polling time (t₁, etc.) of the individual polling time intervals (t₁ bis t₂, etc.),
wherein
two components of the stopping path (2) for each axis form the basis of the collision calculation in order to create a stopping range (5) created from the possible stopping paths (2) of the part for each axis (x, y),
the first component of which takes braking into account which is based on the polled speed data (Vₓ₂ₘₐₓ or V_{y2max}) that has increased at least during the polling time span (t1 to t2, etc.) by a maximum positive acceleration of the corresponding feed drive, and the other component of which takes braking into account which is based on the polled speed data (Vₓ₂ₘᵢₙ or V_{y2min}) that has decreased at least during the polling time interval (t₁ to t₂, etc.) by a maximum negative acceleration of the corresponding feed drive.

2. Method for avoiding collisions in accordance with Claim 1, wherein at least the positional data (x(t), y(t)) corresponding to the time interval (t₂ to t₃, etc.) following the polling time interval (t₁ to t₂, etc.) are utilised to reduce the stopping range (5) and the collision calculation is also based on these.

3. Method for avoiding collisions in accordance with either Claim 1 or 2, wherein the collision calculation is based on components of the stopping path (2) also modified by the valency safety factors.

4. Method for avoiding collisions in accordance with any one of Claims 1 to 3, wherein braking of the part (1) is initiated at the beginning of the time interval (t₂ to t₃, etc.) following the polling time interval (t₁ to t₂, etc.) if either a collision event has been detected or the collision calculation has not been completed by the time interval (t₂ to t₃, etc.) following the polling time interval (t₁ to t₂, etc.).

5. Method for avoiding collisions in accordance with any one of Claims 1 to 4, wherein the repeated monitoring of the components of the stopping path (2) after initiation of braking is continued and collision monitoring is based upon this and the brake is released when the absence of a collision is determined in this manner.

## Revendications

1. Procédé pour éviter des collisions d'un objet mobile sur un chemin de mouvement le long d'au moins deux axes relativement à un obstacle futur non connu par la surveillance de collision, chaque axe présentant un système d'avancement,
dans lequel on détermine d'après les données relatives de position et de vitesse de l'objet en mouvement, en fonction des données nécessaires de machine et d'objet, dans des intervalles prédéterminés répétés, une distance d'arrêt minimale et on les met à la base du calcul de collision,
mettant à la base du calcul de collision au moins un des composants se référant à chaque axe (x, y) de la distance d'arrêt (2),
ledit calcul prenant en compte un freinage en utilisant des données de vitesse (vₓ(t) ou v_{y}(t))interrogées dans les temps d'interrogation (t1, etc) des intervalles correspondants d'interrogation (t1 à t2, etc.)
**caractérisé par le fait qu'**à la base du calcul de collision pour déterminer un champ d'arrêt(5) formé par les distances possibles d'arrêt (2) de l'objet on met pour chaque axe (x, y) deux composants de la distance d'arrêt (2) s'y rapportant ;
le premier composant tenant compte d'un freinage tiré des données de vitesse (Vₓ₂ₘₐₓ ou V_{y2max}) interrogées élevées, au moins pendant l'intervalle d'interrogation (t₁ à t₂, etc.), par une accélération maximale positive du système d'avancement, correspondant,
le second composant tenant compte d'un freinage tiré des données de vitesse (Vₓ₂ₘₐₓ ou V_{y2max}) interrogées réduites, au moins pendant l'intervalle d'interrogation (t1 à t2, etc.), par une accélération maximale négative du système d'avancement, correspondant.

2. Procédé pour éviter des collisions selon la revendication 1, **caractérisé par le fait que** pour réduire le champ d'arrêt (5) on tient compte au moins des données de position (x(t), y(t)) se référant aux intervalles (t₂ à t₃, etc.) succédant à l'intervalle d'interrogation (t1 à t2, etc.) et on les met aussi à la base du calcul de collision.

3. Procédé pour éviter des collisions selon la revendication 1 ou 2, **caractérisé par le fait qu'**on met à la base du calcul de collision les composants de la distance d'arrêt (2) modifiés en outre par des facteurs de sécurité.

4. Procédé pour éviter des collisions selon une des revendications 1 à 3, **caractérisé par le fait qu'**on initialise le freinage de l'objet (1) au début d'un intervalle (t₂ à t₃, etc.) consécutif à l'intervalle d'interrogation (t₁ à t₂, etc.) quand on détermine la collision ou quand le calcul de collision n'est pas terminé dans l'intervalle (t₂ à t₃, etc.) consécutif à l'intervalle d'interrogation (t₁ à t₂, etc.).

5. Procédé pour éviter des collisions selon une des revendications 1 à 4, **caractérisé par le fait qu'**après une initialisation de freinage, on continue la détermination répétée des composants de la distance d'arrêt (2) et on les met à la base de la surveillance de collision et qu'on libère le freinage grâce à l'absence de collision qui a été détectée.
